# EUROPÄISCHE PATENTSCHRIFT

(11) **EP 1 027 247 B1**
(45) Veröffentlichungstag und Bekanntmachung des Hinweises auf die Patenterteilung: **18.02.2004**
(21) Anmeldenummer: 98965650.9
(22) Anmeldetag: 02.11.1998
(51) Int. Cl.: B62D 3/12

(54) **ZAHNSTANGEN-LENKGETRIEBE**
RACK-AND-PINION STEERING GEAR
MECANISME DE DIRECTION A CREMAILLERE

(30) Priorität: 07.11.1997 DE 19749274
(43) Veröffentlichungstag der Anmeldung: 16.08.2000
(73) Patentinhaber: ZF FRIEDRICHSHAFEN Aktiengesellschaft, 88038 Friedrichshafen (DE)
(72) Erfinder: SOMMER, Rudolf, 73527 Schwäbisch Gmünd (DE)
(86) Internationale Anmeldenummer: PCT/EP1998/006931
(87) Internationale Veröffentlichungsnummer: WO 1999/024306

(56) Entgegenhaltungen:
- DE-A- 1 948 612
- US-A- 5 265 691

## Beschreibung

Die vorliegende Erfindung betrifft ein Zahnstangen-Lenkgetriebe, inbesondere zur Steuerung von Kraftfahrzeugen, gemäss dem Oberbegriff des Anspruchs 1.

Bei den herkömmlichen Zahnstangen-Lenkgetrieben ist es üblich, dass die Zahnstange mit ihrer Verzahnung durch eine zentrale Druckfeder und ein dazwischenliegendes Druckstück ständig gegen die Verzahnung des Ritzels gedrückt wird und dass sich die Gegenseite der zentralen Druckfeder auf einer Stellschraube abstützt oder auf einem der Stellschraube vergleichbaren Element, welches auf anderem Wege als durch ein Gewinde eine gewünschte Distanz gewährleistet.

Zwischen den plan ausgeführten Anlageseiten von Druckstück und Stellschraube muss eine axiale Distanz vorgesehen werden, welche mindestens dem Druckstückweg entspricht. Der Druckstückweg ist dabei die Abstandsänderung zwischen Ritzel und Zahnstange infolge ihrer abstandswirksamen Summe der Verzahnungsabweichungen während der Betätigung des Lenkgetriebes.

Wird mit der Stellschraube ein kleineres Druckstückspiel eingestellt als dem abweichungsbedingten Druckstückweg entspricht, kann sich das Lenkgetriebe während seiner Betätigung verklemmen.

Andererseits ist fahrzeugseitig in der Regel ein kleines Druckstückspiel erwünscht, damit unter dem Einfluss der Fahrbahnstösse keine störenden Klappergeräusche im Zahnstangen-Lenkgetriebe entstehen.

Bei Einleitung der Lenkkraft über das Ritzel, femer durch die auf die Zahnstange wirkende Rückstellkraft aus dem Fahrzeugfahrwerk sowie durch Fahrbahnstösse während der Fahrt werden Zahnstange und Druckstück durch den Verzahnungseingriffswinket vom Ritzel so lange weggedrückt, bis das Druckstück an der Stellschraube anliegt.

Ein derartiges Zahnstangen-Lenkgetriebe ist z. B. aus der DE OS 19 48 612 bekannt. Dabei weist die vom Lenkrad her betätigte in einem Gehäuse gelagerte Lenkwelle ein Lenkritzel auf, welches in eine Zahnstange eingreift, die von einem Lagerblock mittelbar durch eine Druckfeder mittels eines im Gehäuse gelagerten Schiebers gegen die Zahnstange gedrückt wird. Der Lagerblock ruht mit einer zylindrischen oder sphärischen Führungsfläche auf einer entsprechenden Lagerfläche am Schieber. Eine Druckfeder, die auf den Schieber einwirkt, stützt sich im Gehäuse auf einer Stellschraube ab; um ein Zurückweichen des Schiebers zu begrenzen und damit einem Eingriff zwischen Zahnstange und
Lenkritzel zu gewährleisten, ist der Weg des Schiebers durch einen Begrenzungsring einstellbar.

In der US-A-5265691 ist ein Zahnstangenlenkgetriebe mit einer zentralen Druckfeder beschrieben, die sich an einer in einem Gehäuse vorgesehenen Stellschraube abstützt und die die Zahnstange über ein Druckstück in Richtung eines Ritzels beaufschlagt, wobei zwischen Druckstück und der Stellschraube eine Ausgleichsscheibe angeordnet ist.

Die bekannten Zahnstangenlenkgetriebe weisen jedoch noch den Nachteil auf, dass die Planlaufabweichungen von Druckstück und Stellschraube zu einem Verkanten des Druckstücks führen können, dass das tatsächlich vorhandene Druckstückspiel nur sehr schwierig feststellbar ist und dass Fahrbahnstösse auch bei kleinem Druckstückspiel zu Klappergeräuschen führen. Diese Geräusche können zwar durch eine stärkere zentrale Druckfeder reduziert werden, wodurch jedoch das Lenkgetriebe in der Regel schwergängiger wird.

Aufgabe der vorliegenden Erfindung ist es, diese Nachteile zu beseitigen und ein Zahnstangen-Lenkgetriebe zu schaffen, bei dem die unerwünschten Klappergeräusche sicher vermieden werden, das leichtgängig ist und bei dem keine Verkantungen des Druckstücks mehr auftreten.

Die Lösung dieser Aufgabe erfolgt mit den im kennzeichnenden Teil des Anspruchs 1 angegebenen Merkmalen; vorteilhafte Ausgestaltungen sind in den Unteransprüchen beschrieben.

Die Erfindung sieht also im wesentlichen die Anordnung zweier zusätzlicher Teile vor, nämlich einmal eine Ausgleichsscheibe zwischen Druckstück und Stellschraube und andererseits eine aussermittige Feder zwischen Ausgleichsscheibe und Stellschraube sowie eine geänderte Form des Druckstücks, wobei die Ausgleichsscheibe an der dem Druckstück zugewandten Seite vorzugsweise eine Kugelform aufweist und in einer daran angepassten Kugelpfanne des Druckstücks anliegt. Die Form der Kugelpfanne kann den Funktions- und Belastungsanforderungen entsprechend gestaltet sein.

Die Erfindung bietet den Vorteil, dass mittels der möglichen Drehung der Ausgleichsscheibe in der Kugelpfanne in beiden Ebenen die Planlaufabweichungen ausgeglichen werden können und dass das gewünschte Druckstückspiel einfach und zweifelsfrei festgestellt bzw. mit der Stellschraube eingestellt werden kann.

Die der Stellschraube zugewandte Seite der Ausgleichsscheibe oder auch die Planfläche der Stellschraube weist einen Abschnitt auf, der maximal der halben Seitenfläche entspricht und der kurvenförmig ausgestaltet, d. h. gekrümmt ist. Die aussermittige Feder sitzt in einer Bohrung der Ausgleichsscheibe, wobei die Bohrung sich auf dem ungekrümmten, d. h. ebenen Abschnitt der Planfläche befindet. Die aussermittige Feder bewirkt, dass die Ausgleichsscheibe bei Distanzvergrösserung zwischen Stellschraube und Druckstück kippt. Dadurch besteht unabhängig von der Axiallage des Druckstücks immer eine Brücke zwischen Druckstück und Stellschraube. Anstelle des üblicherweise vorgesehenen Druckstückspiels wird also ein einstellbarer Druckstückabstand verwendet.

Es sei betont, dass die Flächenkrümmung und die Anordnung der aussermittigen Feder auch an der Stellschraube statt an der Ausgleichsscheibe vorgesehen werden können.

Im folgenden wird die Erfindung anhand der Zeichnung näher erläutert, in der vorteilhafte Ausführungsbeispiele dargestellt sind. Es zeigen
Figur 1 einen vereinfacht dargestellten Schnitt durch ein erfindungsgemässes Lenkgetriebe,
Figur 2 eine mögliche Ausgestaltung der Kugelpfanne,
Figur 3 eine Variante der Kugelpfanne,
Figur 4 eine Variante der Ausgleichsscheibenrückseite, und
Figur 5 die Stellung des Druckstücks mit dem grössten Druckstückabstand.

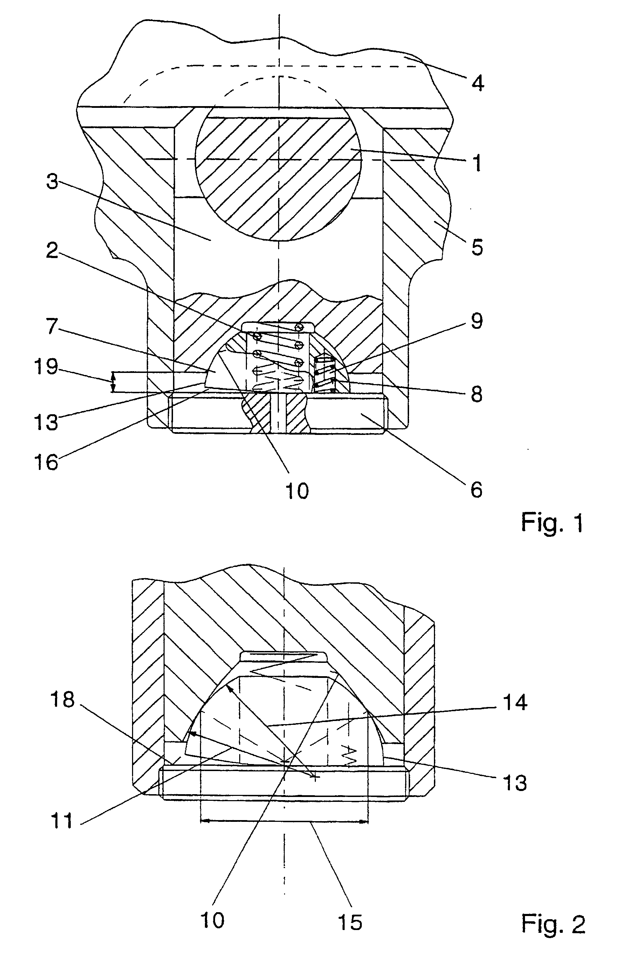

In den Figuren, in denen gleiche Teile mit gleichen Bezugszeichen versehen sind, bezeichnet 1 die Zahnstange des erfindungsgemäss ausgestalteten Zahnstangen-Lenkgetriebes, welche durch eine zentrale Druckfeder 2 und das dazwischen angeordnete Druckstück 3 in Richtung auf das Ritzel 4 beaufschlagt wird (Figur 1). Das andere Ende der zentralen Druckfeder 2 stützt sich auf der in einem Gehäuse 5 montierten Stellschraube 6 ab. Zwischen dem Druckstück und der Stellschraube ist nun eine Ausgleichsscheibe 7 vorgesehen, wobei in der Ausgleichsscheibe 7 eine aussermittige Bohrung 9 vorgesehen ist, in welcher eine aussermittige Feder 8 angeordnet ist, die z. B. eine schraubenförmige Druckfeder ist.

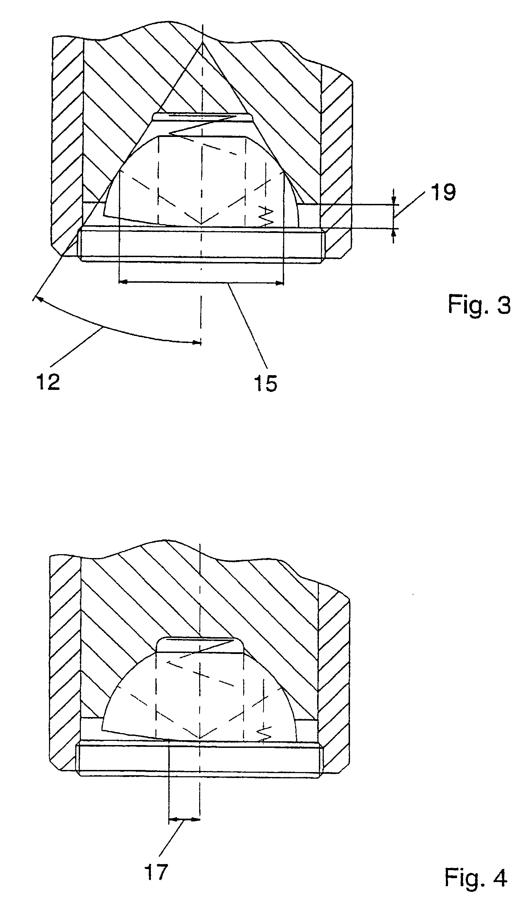

Die dem Druckstück 3 zugewandte Oberseite der Ausgleichsscheibe 7 ist gewölbt ausgestaltet und weist z. B. eine Kugelzone 13 auf, die in eine entsprechend ausgestaltete Kugelpfanne 10 im Druckstück 3 eingreift. Der Kugelpfannenradius 11 der Ausgleichsscheibe kann dabei dieselben Abmessungen aufweisen, wie der Kugelzonenradius 14. Zum Ausgleich von Fertigungsabweichungen der Kugelform kann es jedoch vorteilhaft sein, den Kugelpfannenradius gemäss Figur 2 etwas grösser festzulegen oder ihm die Form eines Kegels 12 zu erteilen, wie es in Figur 3 dargestellt ist. Bei Anwendung einer dieser Ausführungsbeispiele ist ausserdem die Grösse des Berührungsflächendurchmessers 15 als Kontaktstelle zwischen Druckstück und Ausgleichsscheibe sowie seine Lage im System gezielt festgelegt. Zusätzlich wird dadurch die Schmierstoffversorgung verbessert.

Die der Stellschraube 6 zugewandte Rückseite weist auf einem Abschnitt, der maximal der Hälfte dieser Seite entspricht, eine kurvenförmige Krümmung 16 auf. Die Bohrung 9 für die aussermittige Feder 8 ist im ebenen Abschnitt der Ausgleichsscheibe angeordnet.

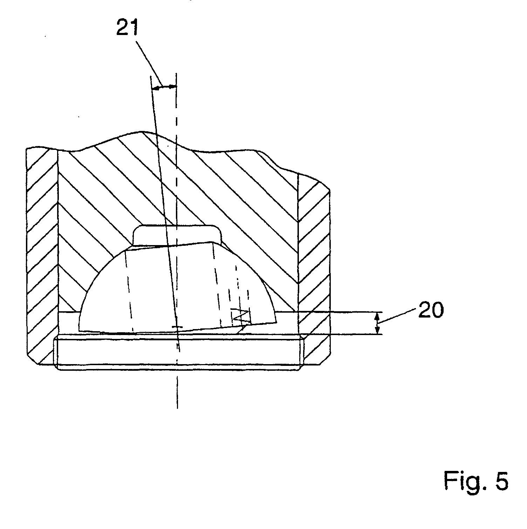

Die in die Bohrung 9 eingesetzte aussermittige Feder 8, z. B. eine Druckfeder, bewirkt bei zunehmenden Abstand zwischen Druckstück und Stellschraube ein Verdrehen der Ausgleichsscheibe, um den in Figur 5 dargestellten Ausgleichsscheiben-Drehwinkel 21 und zurück in die Figur 1 dargestellte Ausgangsstellung. Die Ausgleichsscheibe 7 dreht sich dabei einerseits in der Kugelpfanne 10 des Druckstücks 3 und rollt andererseits mit ihrer gekrümmten Unterseite 16 auf der ebenen Oberfläche 18 der Stellschraube 6 ab. Der Ausgleichsscheiben-Drehwinkel 21 ist in Figur 5 zum besseren Verständnis übertrieben dargestellt. Der praxisnahe Wert liegt sehr weit darunter, so dass keine Funktionsprobleme hinsichtlich der beiden Federn 2 und 8 entstehen.

In Figur 3 ist ferner noch der kleinste Druckstückabstand mit 19 bezeichnet, und in Figur 5 ist der grösste Druckstückabstand mit 20 bezeichnet.

Ist aus Gründen der Belastbarkeit in Folge der Fahrbahnstösse eine über die Hälfte der Fläche hinausgehende ebene Unterseite der Ausgleichsscheibe erforderlich, so kann dies, wie es in Figur 4 dargestellt ist, zu Lasten der Kurvenzone um eine ebene Flächenzone 17 erfolgen, ohne die Funktion zu beeinträchtigen.

Anstelle der beispielhaft dargestellten schraubenförmigen Druckfeder 8 kann die Auslenkung der Ausgleichsscheibe 7 zur Erreichung des Ausgleichsscheiben-Drehwinkels 21 auch durch eine Zugfeder oder eine Biegefeder erfolgen.

Je nach Platzangebot sind die Krümmung 16 und die aussermittige Feder 8 auch an der Stellschraube 6 anstelle der Ausgleichsscheibe 7 anbringbar.

### Bezugszeichenliste

- 1: Zahnstange
- 2: zentrale Druckfeder
- 3: Druckstück
- 4: Ritzel
- 5: Gehäuse
- 6: Stellschraube
- 7: Ausgleichsscheibe
- 8: aussermittige Feder
- 9: Bohrung für aussermittige Feder
- 10: Kugelpfanne des Druckstücks
- 11: Kugelpfannenradius
- 12: Kegel
- 13: Kugelzone der Ausgleichsscheibe
- 14: Kugelzonenradius
- 15: Berührungsflächendurchmesser
- 16: kurvenförmige Krümmung der Ausgleichsscheiben-Unterseite
- 17: ebener Abschnitt der Ausgleichscheibe
- 18: Stellschrauben-Oberseite
- 19: kleinster Druckstückabstand
- 20: grösster Druckstückabstand
- 21: Ausgleichsscheiben-Drehwinkel

## Patentansprüche

1. Zahnstangen-Lenkgetriebe mit einer zentralen Druckfeder, die sich an einer in einem Gehäuse vorgesehenen Stellschraube abstützt und die die Zahnstange über ein Druckstück in Richtung eines Ritzels beaufschlagt, wobei zwischen dem Druckstück und der Stellschraube eine Ausgleichsscheibe angeordnet ist, **dadurch gekennzeichnet, dass** die dem Druckstück (3) zugewandte Oberseite der Ausgleichsscheibe eine Kugelzone (13) aufweist, die in eine an der Unterseite des Druckstücks (3) angeordnete an sie angepasste Kugelpfanne (10) eingreift und dass zwischen der Ausgleichsscheibe und der Stellschraube eine aussermittige Feder (8) integriert ist.

2. Zahnstangen-Lenkgetriebe nach Anspruch 1, **dadurch gekennzeichnet, dass** die Ausgleichsscheibe (7) auf ihrer, der Stellschraube (6) zugewandten Unterseite eine aussermittige Bohrung (9) aufweist, in welche die aussermittige Feder (8) eingreift.

3. Zahnstangen-Lenkgetriebe nach Anspruch 1, **dadurch gekennzeichnet, dass** der Radius (11) der Kugelpfanne grösser ist, als der Radius (13) der Kugelzone der Ausgleichsscheibe (7).

4. Zahnstangen-Lenkgetriebe nach Anspruch 1, **dadurch gekennzeichnet, dass** die Kugelpfanne (10) des Druckstücks (3) die Form eines Kegels (12) aufweist.

5. Zahnstangen-Lenkgetriebe nach Ansprüchen 1 bis 4, **dadurch gekennzeichnet, dass** ein Abschnitt der der Stellschraube (6) zugewandten Unterseite der Ausgleichsscheibe (7) eine konvexe Krümmung (16) aufweist.

6. Zahnstangen-Lenkgetriebe nach Ansprüchen 1 bis 5, **dadurch gekennzeichnet, dass** die Bohrung 9 und die aussermittige Feder (8) im ebenen Abschnitt der der Stellschraube (6) zugewandten Unterseite der Ausgleichsscheibe (7) angeordnet sind.

7. Zahnstangen-Lenkgetriebe nach Ansprüchen 1 und 5, **dadurch gekennzeichnet, dass** die konvexe Krümmung (16) die Form eines Kreisbogens aufweist.

8. Zahnstangen-Lenkgetriebe nach Ansprüchen 1 und 5, **dadurch gekennzeichnet, dass** die konvexe Krümmung (16) die Form einer Ellipse oder einer Hyperbel oder einer Parabel aufweist.

9. Zahnstangen-Lenkgetriebe nach Ansprüchen 5 bis 8, **dadurch gekennzeichnet, dass** die Ausdehnung der Krümmung (16) sich über die Hälfte der Unterseite der Ausgleichsscheibe (7) erstreckt.

10. Zahnstangen-Lenkgetriebe nach Ansprüchen 5 bis 9, **dadurch gekennzeichnet, dass** die Ausdehnung der Krümmung (16) der Ausgleichsscheibe (7) um eine ebene Flächenzone (17) verkleinert ist.

11. Zahnstangen-Lenkgetriebe nach Ansprüchen 1 bis 4, **dadurch gekennzeichnet, dass** die der Ausgleichscheibe (7) zugewandte Oberseite der Stellschraube (6) eine gewölbte Krümmung (16) aufweist.

12. Zahnstangen-Lenkgetriebe nach einem oder mehreren der vorhergehenden Ansprüche, **dadurch gekennzeichnet, dass** die Bohrung und die aussermittige Feder auf dem ebenen Abschnitt der der Ausgleichsscheibe (7) zugewandten Oberfläche der Stellschraube (6) angeordnet sind.

13. Zahnstangen-Lenkgetriebe nach Anspruch 12, **dadurch gekennzeichnet, dass** die Krümmung (16) die Form eines Kreisbogens aufweist.

14. Zahnstangen-Lenkgetriebe nach Anspruch 12, **dadurch gekennzeichnet, dass** die Krümmung (16) die Form einer Ellipse oder einer Hyperbel oder einer Parabel aufweist.

15. Zahnstangen-Lenkgetriebe nach Anspruch 12, **dadurch gekennzeichnet, dass** die Ausdehnung der Krümmung (16) der Oberseite der Stellschraube (6) um eine ebene Flächenzone verkleinert ist.

16. Zahnstangen-Lenkgetriebe nach einem der vorhergehenden Ansprüche, **dadurch gekennzeichnet, dass** die aussermittige Feder (8) eine schraubenförmige Druck- oder Zugfeder oder eine Biegefeder ist.

17. Zahnstangen-Lenkgetriebe nach einem oder mehreren der vorhergehenden Ansprüche, **dadurch gekennzeichnet, dass** mittels Abstimmung des Abstandes zwischen dem Mittelpunkt des Kugelzonenradius (14) und dem Mittelpunkt der kreisbogenförmigen Krümmung (16) der Ausgleichsscheiben-Rückseite auf den Radius der kreisförmigen Krümmung während der Änderung des Druckstückabstands (19, 20) ein schlupffreies Abrollen der Ausgleichsscheiben-Rückseite auf der Stellschrauben-Planfläche erfolgt.

## Claims

1. Rack-and-pinion steering mechanism having a central compression spring which is supported on an adjusting screw provided in a housing and which acts on the rack in the direction of a pinion via a pressure piece, a compensation disc being arranged between the pressure piece and the adjusting screw, **characterized in that** the upper side, facing the pressure piece (3), of the compensation disc has a spherical zone (13) which engages in a ball socket (10) which is matched to it and is arranged on the underside of the pressure piece (3), and **in that** an eccentric spring (8) is integrated between the compensation disc and the adjusting screw.

2. Rack-and-pinion steering mechanism according to Claim 1, **characterized in that**, on its underside facing the adjusting screw (6), the compensation disc (7) has an eccentric bore (9), in which the eccentric spring (8) engages.

3. Rack-and-pinion steering mechanism according to Claim 1, **characterized in that** the radius (11) of the ball socket is larger than the radius (13) of the spherical zone of the compensation disc (7).

4. Rack-and-pinion steering mechanism according to Claim 1, **characterized in that** the ball joint (10) of the pressure piece (3) is in the shape of a cone (12).

5. Rack-and-pinion steering mechanism according to Claims 1 to 4, **characterized in that** a section of the underside, facing the adjusting screw (6), of the compensation disc (7) has a convex curvature (16).

6. Rack-and-pinion steering mechanism according to Claims 1 to 5, **characterized in that** the bore (9) and the eccentric spring (8) are arranged in the flat section of the underside, facing the adjusting screw (6), of the compensation disc (7).

7. Rack-and-pinion steering mechanism according to Claims 1 and 5, **characterized in that** the convex curvature (16) is in the shape of a circular arc.

8. Rack-and-pinion steering mechanism according to Claims 1 and 5, **characterized in that** the convex curvature (16) is in the shape of an ellipse or a hyperbola or a parabola.

9. Rack-and-pinion steering mechanism according to Claims 5 to 8, **characterized in that** the extent of the curvature (16) reaches over half of the underside of the compensation disc (7).

10. Rack-and-pinion steering mechanism according to Claims 5 to 9, **characterized in that** the extent of the curvature (16) of the compensation disc (7) is reduced by an amount equal to a flat surface zone (17).

11. Rack-and-pinion steering mechanism according to Claims 1 to 4, **characterized in that** the upper side, facing the compensation disc (7), of the adjusting screw (6) has an arched curvature (16).

12. Rack-and-pinion steering mechanism according to one or more of the preceding claims, **characterized in that** the bore and the eccentric spring are arranged on the flat section of the surface, facing the compensation disc (7), of the adjusting screw (6).

13. Rack-and-pinion steering mechanism according to Claim 12, **characterized in that** the curvature (16) is in the shape of a circular arc.

14. Rack-and-pinion steering mechanism according to Claim 12, **characterized in that** the curvature (16) is in the shape of an ellipse or a hyperbola or a parabola.

15. Rack-and-pinion steering mechanism according to Claim 12, **characterized in that** the extent of the curvature (16) of the upper side of the adjusting screw (6) is reduced by an amount equal to a flat surface zone.

16. Rack-and-pinion steering mechanism according to one of the preceding claims, **characterized in that** the eccentric spring (8) is a helical compression or tension spring or a spiral spring.

17. Rack-and-pinion steering mechanism according to one or more of the preceding claims, **characterized in that** the rear side of the compensation disc rolls without slip on the flat surface of the adjusting screw by adapting the spacing between the centre point of the radius (14) of the spherical zone and the centre point of the curvature (16), in the shape of a circular arc, of the rear side of the compensation disc to the radius of the circular curvature while the spacing (19, 20) of the pressure piece changes.

## Revendications

1. Mécanisme de direction à crémaillère, comprenant un ressort de pression central qui s'appuie contre une vis de réglage prévue dans un carter et qui sollicite la crémaillère dans la direction d'un pignon par le biais d'un élément de pression, dans lequel, entre l'élément de pression et la vis de réglage, on dispose un disque de compensation, **caractérisé en ce que** le côté supérieur du disque de compensation tourné vers l'élément de pression (3) présente une zone sphérique (13) qui vient en prise dans une calotte sphérique (10) adaptée à celle-ci et disposée sur le côté inférieur de l'élément de pression (3) et **en ce qu'**un ressort excentré (8) est intégré entre le disque de compensation et la vis de réglage.

2. Mécanisme de direction à crémaillère selon la revendication 1, **caractérisé en ce que** le disque de compensation (7) présente, sur son côté inférieur tourné vers la vis de réglage (6), un alésage excentré (9) dans lequel s'engage le ressort excentré (8).

3. Mécanisme de direction à crémaillère selon la revendication 1, **caractérisé en ce que** le rayon (11) de la calotte sphérique est supérieur au rayon (13) de la zone sphérique du disque de compensation (7).

4. Mécanisme de direction à crémaillère selon la revendication 1, **caractérisé en ce que** la calotte sphérique (10) de l'élément de pression (3) présente la forme d'un cône (12).

5. Mécanisme de direction à crémaillère selon les revendications 1 à 4, **caractérisé en ce qu'**une portion du côté inférieur du disque de compensation (7) tourné vers la vis de réglage (6) présente une courbure convexe (16).

6. Mécanisme de direction à crémaillère selon les revendications 1 à 5, **caractérisé en ce que** l'alésage (9) et le ressort excentré (8) sont disposés dans la portion plane du côté inférieur du disque de compensation (7) tournée vers la vis de réglage (6).

7. Mécanisme de direction à crémaillère selon les revendications 1 et 5, **caractérisé en ce que** la courbure convexe (16) présente la forme d'un arc de cercle.

8. Mécanisme de direction à crémaillère selon les revendications 1 et 5, **caractérisé en ce que** la courbure convexe (16) présente la forme d'une ellipse ou d'une hyperbole ou d'une parabole.

9. Mécanisme de direction à crémaillère selon les revendications 5 à 8, **caractérisé en ce que** l'extension de la courbure (16) s'étend sur la moitié du côté inférieur du disque de compensation (7).

10. Mécanisme de direction à crémaillère selon les revendications 5 à 9, **caractérisé en ce que** l'extension de la courbure (16) du disque de compensation (7) est réduite à la mesure d'une zone de surface plane (17).

11. Mécanisme de direction à crémaillère selon les revendications 1 à 4, **caractérisé en ce que** le côté supérieur de la vis de réglage (6) tourné vers le disque de compensation (7) présente une courbure bombée (16).

12. Mécanisme de direction à crémaillère selon l'une quelconque ou plusieurs des revendications précédentes, **caractérisé en ce que** l'alésage et le ressort excentré sont disposés sur la portion plane de la surface de la vis de réglage (6) tournée vers le disque de compensation (7).

13. Mécanisme de direction à crémaillère selon la revendication 12, **caractérisé en ce que** la courbure (16) présente la forme d'un arc de cercle.

14. Mécanisme de direction à crémaillère selon la revendication 12, **caractérisé en ce que** la courbure (16) présente la forme d'une ellipse ou d'une hyperbole ou d'une parabole.

15. Mécanisme de direction à crémaillère selon la revendication 12, **caractérisé en ce que** l'extension de la courbure (16) du côté supérieur de la vis de réglage (6) est réduite à la mesure d'une zone de surface plane.

16. Mécanisme de direction à crémaillère selon l'une quelconque des revendications précédentes, **caractérisé en ce que** le ressort excentré (8) est un ressort de pression ou un ressort de traction de forme hélicoïdale, ou un ressort de flexion.

17. Mécanisme de direction à crémaillère selon l'une quelconque ou plusieurs des revendications précédentes, **caractérisé en ce qu'**au moyen de l'adaptation de la distance entre le centre du rayon de la zone sphérique (14) et le centre de la courbure en forme d'arc de cercle (16) du côté arrière du disque de compensation au rayon de la courbure de forme circulaire, il se produit, pendant la variation de la distance de l'élément de pression (19, 20), un roulement sans glissement du côté arrière du disque de compensation sur la surface plane de la vis de réglage.
